# EUROPEAN PATENT APPLICATION

(11) **EP 2 492 836 A1**
(43) Date of publication of application: **29.08.2012**
(21) Application number: 09850543.1
(22) Date of filing: 19.10.2009
(51) Int. Cl.: G06F 21/20

(54) **TERMINAL MANAGEMENT SYSTEM AND TERMINAL MANAGEMENT METHOD**

(71) Applicant: Suginaka, Junko, Tokyo 105-0001 (JP)
(72) Inventor: FURUKAWA, Yoshihisa, Tokyo 102-0094 (JP)
(74) Representative: Müller - Hoffmann & Partner
(86) International application number: PCT/JP2009/067976
(87) International publication number: WO 2011/048645

(57) **Abstract**

A terminal management system includes a USB memory (4) storing medium identification information and member identification information and an authentication server (5) connected to a terminal (1) via a network (7). The terminal (1) includes a terminal ID storage unit (222, 223) storing terminal identification information and connection location information, a loading detector unit (302) that detects the loading of the USB memory (4), and a determination information retrieving unit (303) that reads from the USB memory (4) the two pieces of identification information, and from the terminal ID storage unit (222, 223) the two pieces of information, and transmits the read information to the authentication server (5). The authentication server 5 includes a legitimacy determining unit (501). The legitimacy determining unit (501) determines the legitimacy of the USB memory (4) from the combination of the two pieces of identification information, and the legitimacy of the terminal (1) from the combination of the two pieces of information, and returns determination results to the terminal (1) as a transmission source. If the USB memory (4) and the terminal (1) are determined as being legitimate, an execution permit/prohibit unit (304) in the terminal (1) permits a program execution processor unit (211) to execute a particular AP of the particular AP storage unit (232).

## Description

### Technical Field

The present invention relates to a terminal management technique that manages an execution of a given application software program on an information processing terminal connected to a network.

### Background Art

With rapid advances in communication networks including the Internet, services including a variety of business transactions are performed via the communication networks today. Similarly, services such as administrative procedures at administrative organizations are performed via the communication networks. When such services are provided, information exchanged via the network typically includes payment information, transaction information, private information, and the like, and it is important that a terminal be operated by an identical person. Therefore, identity fraud needs to be prevented by performing identity authentication on a person who operates the terminal.

Patent Literature 1 describes a technique of preventing identity fraud. In order to prevent an unscrupulous person from stealing transfer information, a session key (SKey) is attached to each information transfer program and SKey is presented in an information transfer operation to guarantee authenticity of the identical person. Moreover, according to Patent Literature 1, SKey, if stolen in the past, is invalidated by modifying SKey continually and periodically. In addition, if time of information transfer is set to be longer than a period within which SKey is modified, even if a person with false identity presents an authorized SKey at the time of access, the person with false identity collides with the identical person as long as the identical person accesses later with SKey, therefore, the presence of the person with false identity is at least detected in this way.

Patent Literature 2 and 3 discloses an authentication method that effectively prevents identity fraud to the identical person by performing identity authentication on an authentication server at a high accuracy level. According to the related art, a password that is input from a terminal side is set in an OTP (one time password) method. The OTP method is known as one of the authentication techniques that examine whether a person accessing a terminal is an authorized user or not when the person uses the server via the terminal connected to a network. A standard authentication method that transmits a user name and a password to a server has a disadvantage that someone may "eavesdrop" on the password in a communication line between the terminal and the server. Thus, the server first transmits to the terminal a random character string serving as a "seed" of an authentication character string while the user enters a password to the terminal. In accordance with a predetermined procedure, a software program of the terminal performs an arithmetic process on the character string transmitted from the server and the password entered by the user, and transmits results of the arithmetic process to the server. In succession, the server examines the received character string, thereby checking whether the user is an authorized user. The character string transmitted from the server is random and set to be different each time, and the password that the user specifies is transmitted to the server as a character string that is different each time. Therefore, even if someone eavesdrops on an exchange of information over the communication line, the same password is not used again and the unauthorized use of the server is prevented.

### Citation List

### Patent Literature

[Patent Literature 1] Japanese Unexamined Patent Application Publication No. 2003-244125
[Patent Literature 2] Japanese Unexamined Patent Application Publication No. 2008-015924
[Patent Literature 3] Japanese Unexamined Patent Application Publication No. 2002-149613

### Summary of Invention

### Technical Problem

A technique disclosed in Patent Literature 1 modifies a session key each time information is transmitted, and thus only permits the presence of a person with false identity to be recognized. The technique is not designed to permit or prohibit the execution of a program in response to an authentication result. Also, techniques disclosed in Patent Literature 2 and 3 allow a user to manually enter a password each time, perform an authentication process on an authentication server side in accordance with the OTP method, and thus avoid identity fraud. The techniques are different from an embodiment in which a personal ID and the like serve as a base for an authentication process. The techniques disclosed in Patent Literature 1-3 are not beyond a technical domain where whether to permit or prohibit service execution is determined based on authentication on authentication information of the identical person.

The object of the invention is to provide a terminal management system and a terminal management method of the system that determines whether to permit or prohibit the execution of a particular application software program in the information processing terminal in a space discriminated from an execution space of a general application software program on condition that a recording medium held by a member, and storing predetermined information is loaded on a general information processing terminal, and that the recording medium is authenticated in accordance with the predetermined information on a server side.

### Solution to Problem

The invention claimed in claim 1 relates to a terminal management system that manages execution of a given application software program on an information processing terminal connected to a network. The terminal management system includes a recording medium that is a portable-type recording medium held by a member, and includes a storage unit where medium identification information indentifying the recording medium and member identification information identifying the member are recorded, and an authentication server connected to the information processing terminal via the network. The information processing terminal includes a terminal information storage unit that stores terminal identification information identifying the information processing terminal, and connection location information identifying a connection location with the network, application writing means that writes one or a plurality of particular application software programs from a predetermined external memory to a particular application storage unit, program execution processing means that starts up the particular application software program and controls a production of a predetermined document and transmission and reception of the produced document, loading detector means that detects the loading of the recording medium, determination information retrieving means that, when a predetermined exclusive application software program from among the particular application software programs is started in response to a detection of the loading, reads from the loaded recording medium the medium identification information and the member identification information, and from the terminal information storage unit, the terminal identification information and the connection location information, and then transmits to the server the medium identification information, the member identification information, the terminal identification information and the connection location information. The server includes determining means that determines from a combination of the medium identification information and the member identification information whether the recording medium is legitimate, and determines from a combination of the terminal identification information and the connection location information whether the information processing terminal is legitimate, and returns determination results thereof to the information processing terminal that is a transmission source. The information processing terminal includes execution permit/prohibit means that permits the program execution processing means to perform program execution if the determining means has determined that the recording medium and the information processing terminal are legitimate.

The invention claimed in claim 8 relates to a terminal management method of a terminal management system that manages execution of a given application software program on an information processing terminal connected to a network. The system includes a recording medium that is a portable-type recording medium held by a member, and includes a storage unit where medium identification information indentifying the recording medium and member identification information identifying the member are recorded, and an authentication server connected to the information processing terminal via the network. The terminal management method includes writing with application writing means in the information processing terminal one or a plurality of particular application software programs from a predetermined external memory to a particular application storage unit, detecting, with loading detector means in the information processing terminal, the loading of the recording medium, when a predetermined exclusive application software program from among the particular application software programs is started in response to a detection of the loading, reading, with determination information retrieving means in the information processing terminal, from the loaded recording medium the medium identification information and the member identification information, and from a terminal information storage unit, terminal identification information identifying the information processing terminal and connection location information identifying a connection location with network, and then transmitting to the server the medium identification information, the member identification information, the terminal identification information and the connection location information, determining, with determining means in the server, from a combination of the medium identification information and the member identification information whether the recording medium is legitimate, determining from a combination of the terminal identification information and the connection location information whether the information processing terminal is legitimate, and returning determination results to the information processing terminal that is a transmission source, if the determining means has determined that the recording medium and the information processing terminal are legitimate, returning, with execution permit/prohibit means in the information processing terminal, the execution permission to the information processing terminal as the transmission source, and if the execution permission is received, permitting, with the program execution processing means in the information processing terminal, the particular application software program to be started up and controlling a production of a predetermined document and transmission and reception of the produced document.

According to the invention, the terminal management system manages the execution of the given application software program through the information processing terminal connected to the network. The system includes the recording medium being the portable-type recording medium held by the member, and having the storage unit where the medium identification information indentifying the recording medium and the member identification information identifying the member are recorded, and the authentication server connected to the information processing terminal via the network. The application writing means in the information processing terminal writes one or the plurality of particular application software programs from the external memory to the particular application storage unit. Under this condition, the loading detector means in the information processing terminal detects whether the recording medium is loaded on the terminal. If the loading detector means detects that the recording medium is loaded on the terminal, the determination information retrieving means in the information processing terminal starts up the predetermined exclusive application software program from among the particular application software programs, and reads from the loaded recording medium the medium identification information and the member identification information, and from the terminal information storage unit, the terminal identification information identifying the information processing terminal and the connection location information identifying the connection location with the network, and then transmits to the server the medium identification information, the member identification information, the terminal identification information and the connection location information. In succession, the determining means in the server determines from the combination of the medium identification information and the member identification information whether the recording medium is legitimate, and determines from the combination of the terminal identification information and the connection location information whether the information processing terminal is legitimate, and returns determination results thereof to the information processing terminal that is the transmission source. If it has been determined that the recording medium and the information processing terminal are legitimate, the execution permit/prohibit means in the information processing terminal returns an execution permission to the information processing terminal as the transmission source. The program execution processing means in the information processing terminal permits the particular application software program to be started up and controls the production of the predetermined document and the transmission and reception of the produced document.

A general information processing terminal determines whether to permit or execute a particular application software program in the information processing terminal in a space discriminated from an execution space of a general application software program on condition that a recording medium held by a member, and storing predetermined information is loaded in the information processing terminal, and that the recording medium is authenticated in accordance with the predetermined information on a server side.

### Advantageous Effects of Invention

According to the present invention, the general information processing terminal is enabled to execute the particular application software program in the information processing terminal in the space discriminated from the execution space of the general application software program.

### Brief Description of Drawings

FIG. 1 illustrates a general configuration of a network system to which a terminal management system of the present invention is applied.
FIG. 2 is a functional block diagram of a terminal processor and a particular AP processor in a terminal, and a USB memory and an authentication server.
FIG. 3 is a flowchart illustrating an example of a particular AP retrieval process executed by a CPU of the particular AP processor (CPU in the terminal processor).
FIG. 4 is a flowchart illustrating an example of a USB port state detection process executed by the CPU of the particular AP processor.
FIG. 5 is a flowchart illustrating an example of a post USB-loading process executed by the CPU of the particular AP processor.
FIG. 6 is a flowchart illustrating an example of a legitimacy determination process to be executed by a CPU of the authentication server.
FIG. 7 illustrates an example of a subroutine illustrating step #7 (checking operation) of the legitimacy determination process.
FIG. 8 is a flowchart illustrating an example of a particular AP execution process executed by the CPU of the particular AP processor.
FIGs. 9A and 9B illustrate an example of an arrangement of an authentication server system over a network, wherein FIG. 9A illustrates a plurality of authentication servers linked over the network, and FIG. 9B illustrates a layer structure of the authentication servers.
FIG. 10 is a flowchart illustrating an example of an authentication server determination process of the terminal of FIGs. 9A and 9B.
FIG. 11 is a flowchart illustrating an example of an information exchange process performed among the servers of FIGs. 9A and 9B.

### Description of Embodiments

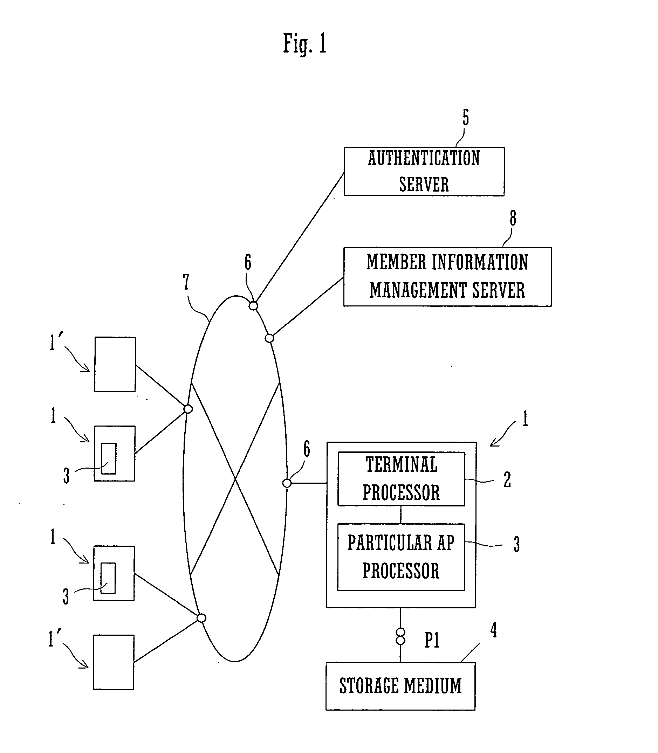

FIG. 1 illustrates a general configuration of a network system to which a terminal management system of the present invention is applied. The network system of FIG. 1 includes terminals (information processing terminals) 1 arranged for members, including consumers, stores, companies, and further one or a plurality of banking institutions that make settlement, a member information management server 8 installed at an administering organization that manages and stores information of each terminal 1 and among terminals 1 in a package fashion, and an authentication server 5 that authenticates a member who uses a terminal 1.

The terminal 1 is typically a personal computer having a CPU (Central Processing Unit). The terminal 1 includes a terminal processor 2, and a particular AP processor 3. The terminal processor 2 creates, processes, and stores information using a typical software program for producing a document and drawings, and performs a typical process, such as transmitting and receiving information using a communication software program. The particular AP processor 3 includes information and a software program that performs a process related to execution of a particular application software program to be discussed below. More specifically, a software program is installed as the particular AP processor 3 on the terminal 1 of each of the consumer, the store, and the company. The software program produces and communicates documents related to buying or selling of products and services, asking for cost estimate of and billing charge for products and services, and payment and money received. More specifically, the terminal 1 settles typical business transactions, issues a bill from a store, receives a bill from a store, issues an instruction sheet to transfer money from a buyer to an account of an banking institution of a bill issuer (i.e., payment), issues a receipt of the money, and performs a transmission and reception process in a variety of digital documents of a business transaction regardless of whether the business transaction is performed in electronic settlement. The terminal 1 can produce a variety of documents in an electronic file in text format or binary format. The electronic files may be exchanged among the terminals 1 via the member information management server 8, for example. Installed on the terminal 1 of each banking institution is a particular application software program that performs a settlement instruction process (an instruction to perform a settlement process between the banking institutions and the like) in accordance with a banking settlement document from the terminal 1 of the consumer or the company.

The terminal 1 has a USB port P1 that permits a portable recording medium such as a USB (Universal Serial Bus) memory 4 to be loaded thereon (connected thereto). The recording medium may be a stick-like hardware element complying with IEEE1394 port. The USB memory 4 has a storage unit (section) that stores predetermined information in an update fashion. The recording medium is not limited to a rewritable memory in principle (if a variation process described below is not performed).

The USB memory 4 includes position information acquisition means such as GPS (Global Positioning System) receiver or the like, as necessary. The GPS receiver is a position fixing device that measures latitude, longitude, and height. The height information may be used as necessary.

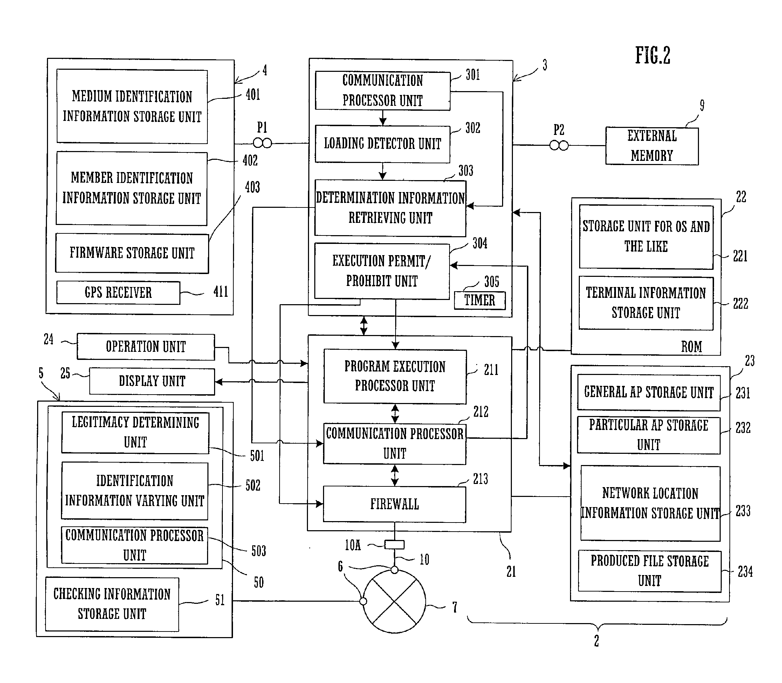

The member information management server 8 stores appropriate information related to a member, for example, member information such as the name, alias, mail address, and address of a member. The member information management server 8 may include a storage unit storing a file transmission and reception history of each file, and a file type for management. The authentication server 5 is described below with reference to FIG. 2.

The system may find other applications. For example, the system may be applied to information communications between a plurality of terminals 1 connected to a LAN in an organization as a public institution that creates, stores and manages secret information, and also may be applied to information communications and a management system between the organization and a terminal external to the organization.

The system employs the Internet as a network in terms of hardware. More specifically, each terminal 1 is connected to the Internet, but a particular application software (AP) program with the security thereof assured using software is permitted to be executed over the Internet as described below. From the standpoint of the network that is isolated using software in accordance with the present invention, the system may be handled as an exclusive network different from the Internet. In this way, a system free from the need to build a new infrastructure may be implemented. And, as necessary, the terminal 1 may be connected to another personal computer via the Internet for ordinary information communications, Web site search, browsing, and information retrieval over the Internet.

As illustrated in FIG. 1, the terminal 1 is connected to a network 7 via a provider (ISP) 6. A plurality of the terminals 1 are connected to the ISP 6. Moreover, servers of an appropriate number, each having a Web site providing a variety of information, are also connected to the ISP 6, although not illustrated in FIG. 1. The terminals 1 connected to the ISP 6 include a terminal 1 having the particular AP processor 3 installed thereon and an ordinary terminal 1' having no particular AP processor 3 installed thereon. The particular AP processor 3 performs a process responsive to the loading of the USB memory 4 onto the terminal 1, a process of reading given information for authentication from the USB memory 4 and then transmitting the read information to the authentication server 5, and a process of controlling the execution permit or prohibit of the particular application software program in response to authentication results.

FIG. 2 is a functional block diagram of the terminal processor 2 and the particular AP processor 3 in the terminal 1, the USB memory 4, and the authentication server 5. As illustrated in FIG. 2, the terminal processor 2 in the terminal 1 includes a controller 21 having a CPU. The controller 21 is connected to ROM (Read Only Memory) 21, and RAM (Random Access Memory) 23. The controller 21 includes a program execution processor unit 211 that executes a specified program, a communication processor unit 212 that exchanges information with another terminal 1 or the authentication server 5 via the network 7, and a firewall 213 that is arranged at a connection unit with a fixed communication line (public telephone line) 10 extending to the ISP 6. More in detail, a router or (optical) network unit 10A, although not illustrated, are arranged between the network 7 and the terminal 1. The firewall 213 may be software or a device. The firewall 213, if software, may be in an installed state on the terminal 1. An operation unit 24 including numeric keys, a mouse and the like, and a display unit 25 including a CRT, a liquid-crystal display or a plasma display displaying an image are connected to the controller 21.

The firewall 213 prevents an unauthorized packet from entering the terminal 1 (or LAN: Local area network) via the network 7, and prevents an unauthorized packet from outputting from the terminal 1 (or LAN) to the network 7. More in detail, the firewall 213 monitors all passing traffic, and passes necessary communications in accordance with an applicable rule (security policy) while blocking communications that are set to be unnecessary. More specifically, the specific rule may be something like "cancel all the packets coming from IP address "111, 111, 111, 111," or "pass all the packets arriving at port number 80."

The program execution processor unit 211 executes the above-described general application software program, and further executes the particular application software program related to the process of the electronic commercial transaction services and administrative services described above in response to an instruction from the particular AP processor 3.

The ROM 22 includes at least a storage unit 221 for OS and the like and a terminal ID storage unit 222. The storage unit 221 for OS and the like stores OS (Operating System) executing the reading of the application software program, BIOS (Basic Input/Output System), and the like. The terminal ID storage unit 222 stores terminal identification information identifying the terminal 1.

The RAM 23 includes, at least, general AP storage unit 231, particular AP storage unit 232, network location information storage unit 233, and produced file storage unit 234. The general AP storage unit 231 stores the general application software program installed thereon. The particular AP storage unit 232 stores the particular application software program installed thereon and related to the process of the electronic commercial transaction services, the administrative services, and the like described above. The produced file storage unit 234 stores a text file or a binary code file, produced in accordance with the general application software program and the particular application software program.

The network location information storage unit 233 may store an MAC (media access control) address as identification information of the network unit 10A. Since the network unit 10A is fixed at a loading position with respect to the fixed terminal 1, the location of the network unit 10A is identified over the network. Therefore, the location of the fixed terminal 1 is fixed by storing the MAC address of the network unit 10A. The communication processor unit 212 extracts the MAC address of the network unit 10A during an authentication process, and transmits the MAC address to the authentication server 5. In one example, the identification information of a fixed communication line 10 may be stored in place of the MAC address of the network unit 10A. Network location information may be stored on the ROM 22 in place of the RAM 23. Files stored on the produced file storage unit 234 include files received and transmitted, in addition to files produced on the terminal 1.

The particular AP processor 3 is a software program for performing authentication and is retrieved from the external memory 9 via a port P2. In one contemplated example, the external memory 9 is set up as a predetermined memory unit within the member information management server 8 over the network, the particular AP processor 3 is downloaded from the memory unit via the network 7, and then installed. In another alternative example, at the time of member registration, a special server may lend a software program such as the particular AP processor 3, or the particular AP processor 3 may be supplied in the form of a hard disk.

The particular AP processor 3 includes, at least, communication processor unit 301, loading detector unit 302, determination information retrieving unit 303, execution permit/prohibit unit 304, and timer 305, these elements being implemented by the CPU in the terminal processor 2. The communication processor unit 301 communicates with the USB memory 4. The loading detector unit 302 detects the loading of the USB memory 4 onto a USB port P1. The determination information retrieving unit 303 retrieves information for determining the legitimacy of the terminal 1 and the USB memory 4, and transmits the retrieved information to the authentication server 5. The execution permit/prohibit unit 304 gives an instruct to permit or prohibit the execution of the particular application software program in the particular AP storage unit 232 in response to the determination result from the authentication server 5. The timer 305 measures time and date.

The USB memory 4 includes, at least, as storage areas, medium identification information storage unit 401, member identification information storage unit 402, and firmware storage unit 403. Also, the USB memory 4 includes the GPS receiver 411 at an appropriate location within a casing that protects the USB memory 4.

The medium identification information storage unit 401 stores information preset to identify the USB memory 4. The member identification information storage unit 402 stores information preset to identify a member given the USB memory 4. The firmware storage unit 403, operating with the particular AP processor 3, stores a firmware program that controls reading and writing of information on each memory unit.

The authentication server 5 includes, at least, a controller 50 including a CPU and a checking information storage unit 51. The controller 50 includes, at least, legitimacy determining unit 501, identification information varying unit 502, and communication processor unit 503. The checking information storage unit 51 stores terminal identification information, network location information, medium identification information, and password information, mapped to member identification information.

The legitimacy determining unit 501 checks the predetermined information for authentication transmitted from the terminal 1, such as the terminal identification information, the network location information, the medium identification information, and the member identification information, against information stored on the checking information storage unit 51. If the two pieces of information match each other, the legitimacy determining unit 501 provides a legitimacy result. If the two pieces of information fail to mach each other, the legitimacy determining unit 501 provides an illegitimacy result. The communication processor unit 503 performs exchange (session) of information for the authentication process with the communication processor unit 212 of the terminal 1 as a transmission source, in accordance with TCP/IP (transmission control protocol / internet protocol) specifications.

The identification information varying unit 502 varies a predetermined condition. For example, the authentication server 502 varies predetermined identification information such as, the member identification information at each authentication operation. The identification information varying unit 502 varies the member identification information on the member identification information storage unit 402 and the checking information storage unit 51 in accordance with a predetermined method, thereby rewriting the member identification information. The predetermined methods include, in addition to a method of varying the member identification information in accordance with a predetermined rule, a random setting method using a random number generated by a random number generator. The member identification information newly generated overwrites the content of the checking information storage unit 51. Also, the communication processor unit 503 causes the member identification information newly generated to overwrite the content of the member identification information storage unit 402.

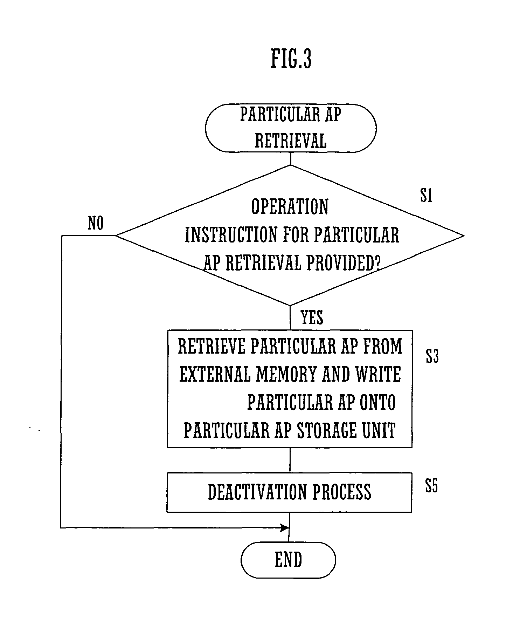

FIG. 3 is a flowchart illustrating a particular AP retrieval process executed by a CPU of the particular AP processor 3 (CPU in the terminal processor 2). The CPU of the particular AP processor 3 determines whether an operation instruction for the retrieval of a particular AP is provided (step S1). If the operation instruction is provided, the particular AP is retrieved from the external memory 9, and then written on the particular AP storage unit 232 (step S3). The retrieved particular AP is subjected to a deactivation process (step S5). If the operation instruction is not provided, the process ends. The deactivation of the particular AP refers to a state in which a file of the particular AP, even if installed on a given memory, is not enabled to be executed as is except for an exclusive AP to be discussed later. Methods of activating the particular AP from the deactivation state are available. In one such method, one of the particular APs is specified as an execution file after the USB memory 4 is loaded on the USB port P1, and the particular AP is activated as an execution file on condition that handshaking is acknowledged through communications with the USB memory 4. In this way, the particular AP is shifted from the deactivation state to the activation state in response to the loading of the USB memory 4. The file execution is smoothly performed in a manner free from the need for the startup operation at the execution of the particular AP later.

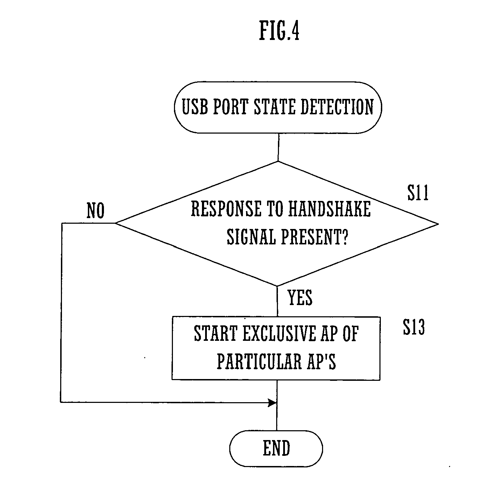

FIG. 4 is a flowchart illustrating a USB port state detection process executed by the CPU of the particular AP processor 3. The CPU of the particular AP processor 3 transmits a handshake signal periodically to the USB port P1 to determine the state of the USB port P1 (step S11). If the USB memory 4 is loaded on the USB port P1, a response signal is returned to the particular AP processor 3 in response to the handshake signal. If the USB memory 4 is not loaded, no response signal is returned. Then, if a response signal is returned, the CPU of the particular AP processor 3 determines that any of chips including the USB memory 4 is loaded, and the exclusive AP within the particular APs is thus started (step S13). The exclusive AP is used to determine whether the loaded chip is the USB memory 4 and to start a communication application software program that executes a process of reading internal information from the USB memory 4 if the loaded chip is the USB memory 4.

If no response signal is returned in reply to the handshake signal in step S11 on the other hand, the process ends. It is noted that the terminal processor 2 instead of the particular AP processor 3 may perform the USB port state detection process. After the loading of the chip on the USB port P1 is detected, processing may be transferred 1 to the particular AP processor 3.

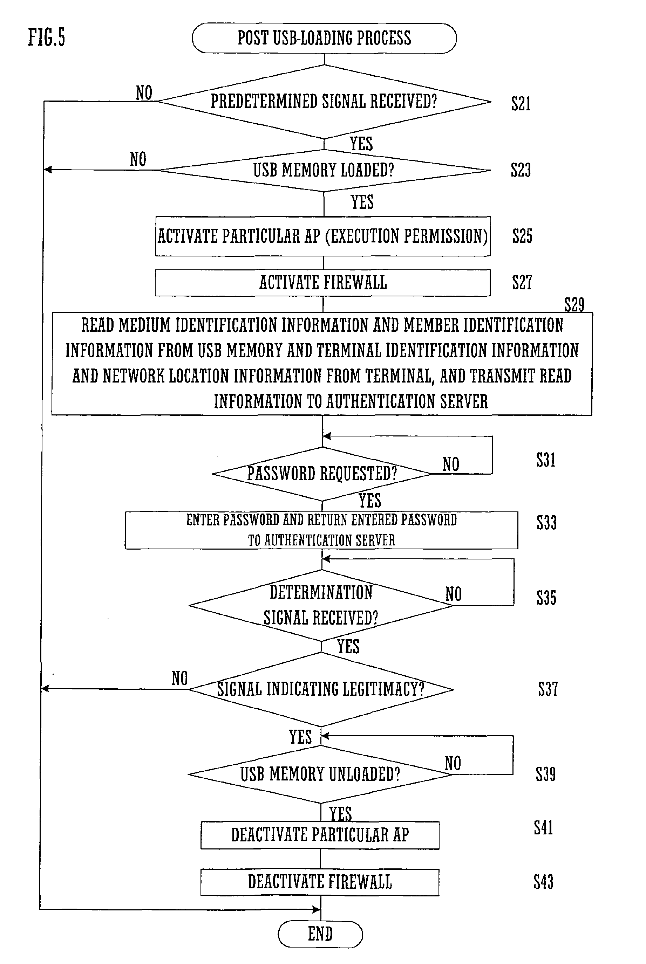

FIG. 5 is a flowchart illustrating a post USB-loading process executed by the CPU of the particular AP processor 3. The exclusive AP from among the particular APs is performed. The CPU of the particular AP processor 3 determines whether a predetermined signal has been received (step S21). If the predetermined signal has been received, the CPU of the particular AP processor 3 determines whether the loaded chip is the USB memory 4 (step S23). If the loaded chip is the USB memory 4, the CPU of the particular AP processor 3 activates a particular application software program, i.e., sets particular application software program to be in a ready-to-start state (step S25). The CPU of the particular AP processor 3 further activates the firewall 213 (step S27).

In succession, the CPU of the particular AP processor 3 reads from the USB memory 4 the medium identification information, and the member identification information, and further reads the terminal identification information and the network location information, then transmits the read information as an authentication request to the authentication server 5 (step S29).

Next, the CPU of the particular AP processor 3 waits on standby to determine whether the terminal 1 has received an input instruction of a password from the authentication server 5 (step S31). More specifically, a password input screen is displayed on the display unit 25 in the terminal 1, and the user is prompted to enter the password. If the password is entered via the operation unit 24, the entered password is returned to the authentication server 5 (step S33).

Next, the CPU of the particular AP processor 3 waits on standby to determine whether a determination signal indicating legitimacy has been received (step S35). If it is determined that the determination signal has been received, the CPU of the particular AP processor 3 determines whether the determination signal is a signal indicating legitimacy (step S37).

The firewall 213 functions at a setting of factors including address (IP address), protocol, port number, and content filtering alone or in combination. The setting may be modifiable. The firewall 213 may be implemented by appropriately switching the content of the setting at a security policy. The security policy is different from a state in which a general application software program of the general AP storage unit 231 is used to a state in which a particular application software program of the particular AP storage unit 232 is used. The security policy in the state with the general application software program used is referred to as a deactivated setting state, and the security policy in the state with the particular application software program used is referred to as an activated setting state. The activated setting state means limiting the IP address to a member, for example. In the state in which the particular application software program of the particular AP storage unit 232 is used (activated state), the program execution processor unit 211 may set to be in a usable state part of the general application software programs of the general AP storage unit 231, for example, an application software program that an ordinary computer virus inspection has proved to be free from computer virus. In such a case, however, the firewall 213 is subject to limitation (deactivated state), and sending data liberally to the outside is preferably controlled.

By monitoring the response signal in reply to the periodic handshake signal, the CPU of the particular AP processor 3 determines whether the USB memory 4 is unloaded from the USB port P1 (step S39). If the USB memory 4 is unloaded, the execution of the particular application software program is set to a disabled state (prohibit state) (step S41). Furthermore, the firewall 213 is deactivated (step S43). The process thus ends. Therefore, the USB memory 4 needs to remain loaded to the terminal 1 to execute the file of the particular AP.

On the other hand, if the determination operation in each of step S21, step S23, and step S37 results in non-affirmative answer, the process ends.

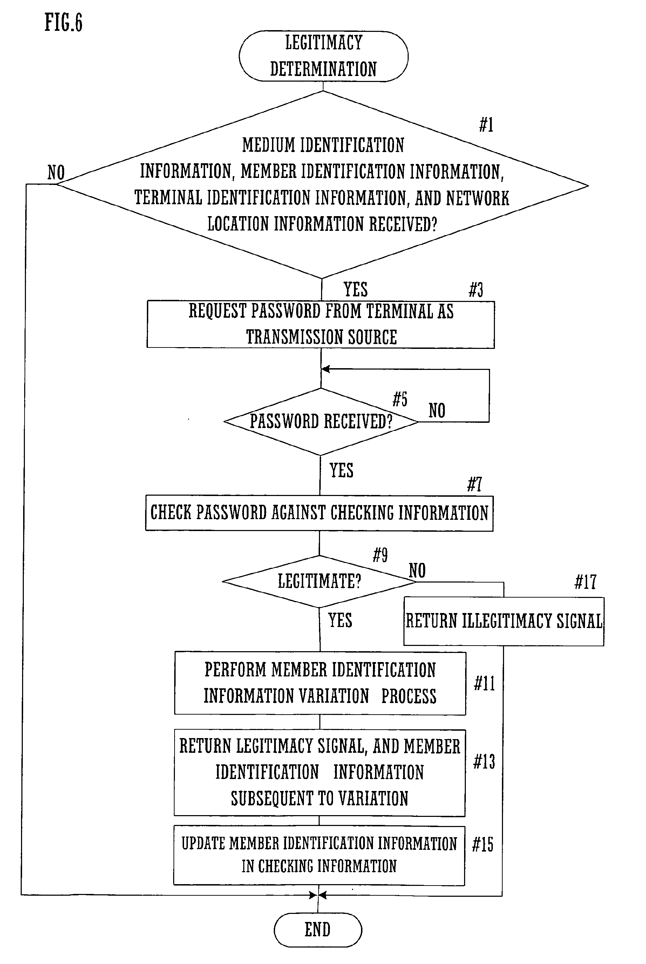

FIG. 6 is a flowchart illustrating an example of a legitimacy determination process to be executed by a CPU of the authentication server 5. The CPU of the authentication server 5 determines whether the authentication server 5 has received the medium identification information, the member identification information, the terminal identification information, and the network location information (step #1). If these pieces of information have been received, the CPU of the authentication server 5 provides an input instruction of the password to the terminal 1 as a transmission source of these pieces of information (step #3). The CPU of the authentication server 5 waits on standby to determine whether the terminal 1 has returned the password (step #5). If the password has been returned, the CPU of the authentication server 5 performs a checking operation to check the password against the checking information (step #7). The checking operations may include a variety of methods inclusive of one method described below.

Next, the CPU of the authentication server 5 then determines in an authentication operation whether the password is legitimate (step #9). If the password is legitimate, the CPU of the authentication server 5 performs a variation process on the member identification information (step #11). The CPU of the authentication server 5 then returns the varied member identification information together with a legitimacy signal to the terminal 1 as a transmission source (step #13), and updates the member identification information in the checking information (step #15). If the authentication operation indicates that the password is not legitimate, the CPU of the authentication server 5 transmits an illegitimacy signal to the terminal 1 as the transmission source (step #17). In one example, ff the authentication operation proves that the password is not legitimate, the CPU of the authentication server 5 may vary the member identification information (step #11), and performs steps #13 and #15. The variation and update process of the identification information may be performed at the end of the file execution of the particular AP.

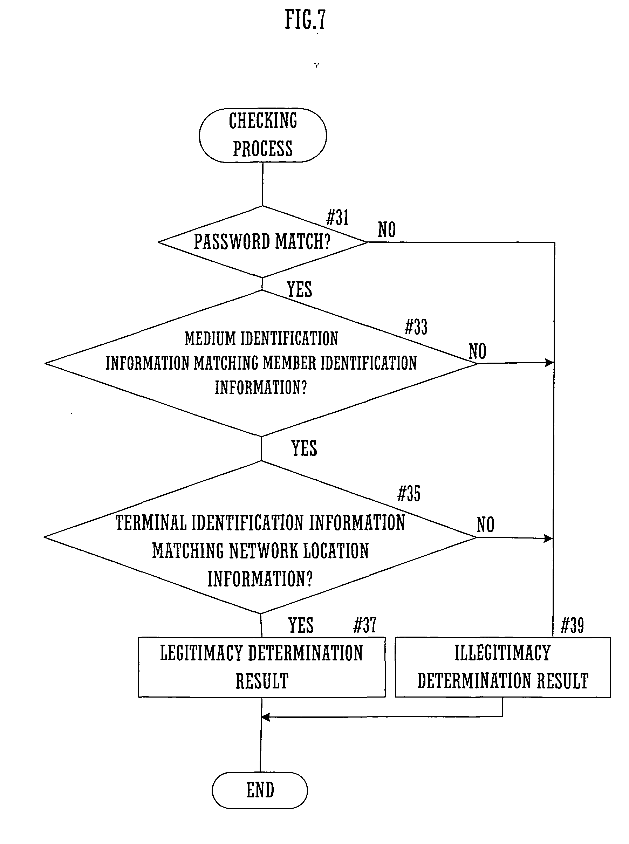

FIG. 7 illustrates an example of a subroutine in step #7 (checking operation) of the legitimacy determination process. First, the CPU of the authentication server 5 determines whether the received password matches password information in the checking information (step #31). If the two passwords match each other, the CPU of the authentication server 5 determines whether the medium identification information of the USB memory 4 matches the member identification information of the USB memory 4 (step #33). If the two pieces of information match each other, the CPU of the authentication server 5 determines whether the terminal identification information of the terminal 1 matches the network location information of the terminal 1 (step #35). If all the determination operations in steps #31, #33, and #35 indicate match results, the CPU of the authentication server 5 outputs a legitimacy determination result (step #37). If no match results from any one of the determination operations in steps #31, #33, and #35, the CPU of the authentication server 5 outputs an illegitimacy determination result (step #39).

In one option, the matching between a combination of the medium identification information and the member identification information and a combination of the matching between the terminal identification information and the network location information may be examined as necessary. In this way, the CPU of the authentication server 5 recognizes that the USB memory 4 of the member is loaded on the terminal 1 that has been pre-registered as a terminal corresponding to the USB memory 4. Since the USB memory 4 is portable, it is contemplated that the USB memory 4 may be loaded on and used with another terminal 1 other than the terminal 1 that has been pre-registered. In such an operation, the combination of the medium identification information and the member identification information is unrelated with the combination of the terminal identification information and the network location information. A no-match result is provided. The no-match result allows the CPU of the authentication server 5 to recognize the use location of the USB memory 4 (terminal 1 and the location thereof over the network).

The accuracy of authentication may be increased more with the USB memory 4 loaded on own terminal 1 than with the USB memory 4 loaded another terminal by adding the authentication criteria described above. Therefore, the degree of each service, such as a maximum permissible amount of money handled, the secrecy level of the service, and the like may be increased. More specifically, the increased accuracy is accounted for an amount of money handled in business, and a browsable document.

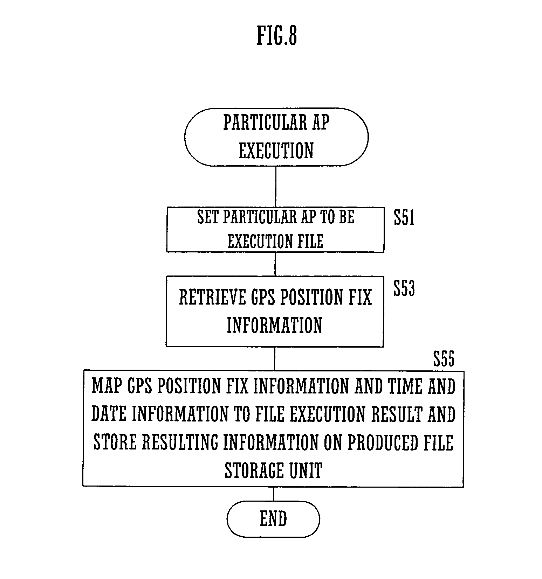

FIG. 8 is a flowchart illustrating an example of a particular AP execution process executed by the CPU of the particular AP processor 3. The CPU of the particular AP processor 3 sets a particular application software program to be an execution file (step S51). Next, the CPU of the particular AP processor 3 retrieves the position information from the GPS receiver 411 in the USB memory 4 (step S53). In succession, the CPU of the particular AP processor 3 maps file execution results to the GPS position fix information, and stores these pieces of information in a mapped state on the produced file storage unit 234 (step S55). In one example, the GPS position fix information may be stored in a mapped state only if the USB memory 4 is used on a terminal 1 other than the pre-registered and corresponding terminal 1 (i.e., only if the combination of the medium identification information and the member identification information is unrelated with the combination of the terminal identification information and the network location information, and thus the no-match result is provided). Since time and date information from the timer 305 is included in this case, a use history of the USB memory 4 may be checked. The GPS position fix information may not be available within a building. In view of such an occasion, immediately preceding position fix information of information received (fixed) before the user just enters the building may be temporarily stored, and then used instead.

Moreover, in one example, the legitimacy determining unit 501 has a function to determine irregularity, based on the position fix information, the time and date information, the member identification information, and other necessary information, and the latest use history of the USB memory 4 of the member. Upon determining that there is an irregularity, the legitimacy determining unit 501 notifies the display unit 25 of the presence of the irregularity. The legitimacy determining unit 501 may then determine that the USB memory 4 is illegitimate, or may prompt the user to enter verification information (such as the name of the member). At any rate, the legitimacy determining unit 501 may perform the legitimacy determination in a wider scope. The regularity determination criteria may include time and distance factors. For example, the regularity determination may be performed based on a discrepancy between the latest time of use and closest geographical point of use and the current authentication time and position fix information.

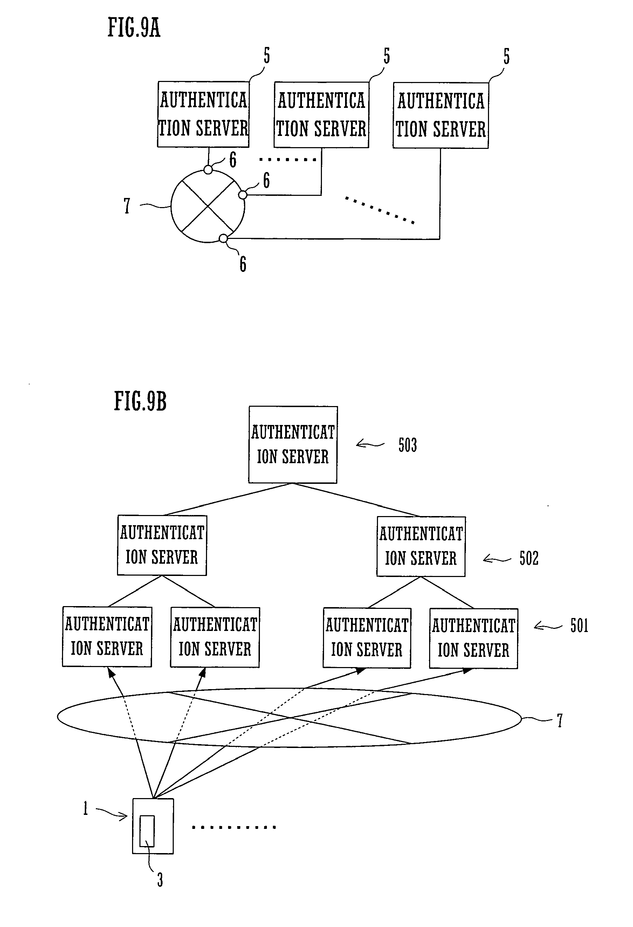

FIGs. 9A and 9B illustrate an example of an arrangement of an authentication server system over the network 7, wherein FIG. 9A illustrates a plurality of authentication servers linked over the network, and FIG. 9B illustrates a layer structure of the authentication servers. The authentication servers 5 are identical in structure to each other in principle. As illustrated in FIG. 9B, the layer structure is a tree structure, and includes authentication servers 501 at a first layer, authentication servers 502 at a second layer, and authentication servers 503 at a third layer. In the example of FIG. 9B, the authentication server system includes four authentication servers 501, two authentication servers 502, and one authentication server 503. The authentication server system is not limited to the illustrated structure. For example, authentication servers 501 of a desired number may be used at the first layer. Two, three or more servers at a lower layer may be allocated to one server at an upper layer. The number of layers may be any number, for example, two, three, four, or more.

In the embodiment, the terminal 1 accesses one of the authentication servers 501 at the first layer, and is not permitted to directly access a server at the second or third layer. This is because each of the authentication servers 501 at the first layer has a global IP address attached thereto, and is specified by the terminal 1 via the network 7. On the other hand, the authentication servers 502 and 503 at the second or higher layers have MAC addresses respectively attached thereto, and are permitted to be linked to only each of the authentication servers 501. As a result, the authentication servers 5 at the second or higher layers are not directly attacked via the network 7.

A priority order may be preferably determined in advance, as to which of the authentication servers 501 the terminal 1 of each member is to be connected to. The priority order may be determined on each combination of the member and the terminal 1 in view of a balance of communication traffic. In such a case, the IP address having the top priority is set first, and then, the IP addresses of the authentication servers 5 are set successively in the priority order below the top priority as necessary. In this way, the use of a large number of authentication servers as a server group increases attack resistance feature, i.e., dispersing workload against an attack.

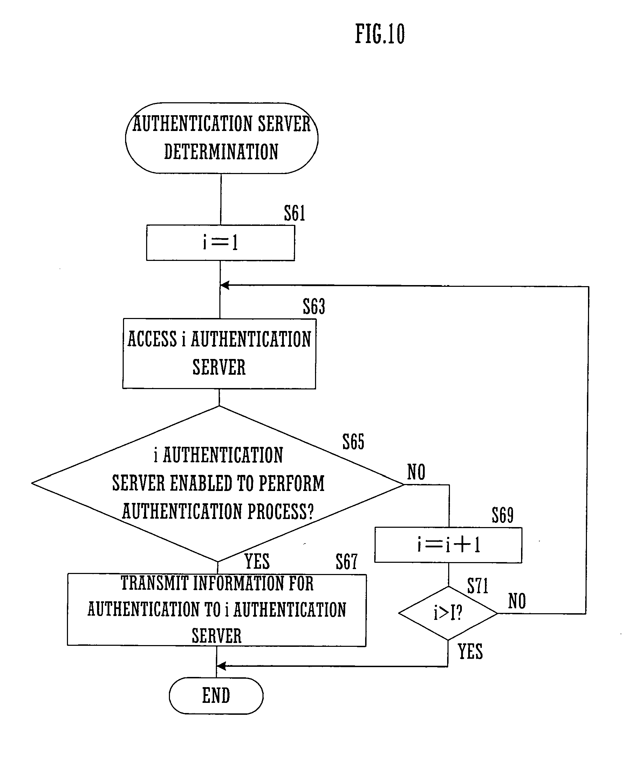

FIG. 10 is a flowchart illustrating an example of an authentication server determination process of the terminal 1 of FIGs. 9A and 9B. If the USB memory 4 is loaded on the terminal, the authentication process starts. The letter i representing the priority order is set to be i = 1 (step S61). In succession, the terminal 1 accesses the authentication server 501 having the priority order i, then determines whether the authentication server 501 having the priority order i is enabled to perform the authentication process (step S65). More specifically, the terminal 1 transmits an authentication request signal to the authentication server 501 and waits on standby for a response (a response signal for permit/prohibit) as to whether the authentication server 501 is enabled to perform the authentication process. If the authentication server 501 is enabled to perform the authentication process (YES from step S65), the terminal 1 transmits a specific signal for authentication to the authentication server 501 (step S67) .

On the other hand, if a response signal indicating that the authentication server 501 is not enabled to perform the authentication process is returned, the terminal 1 increments the priority order i by 1 (step S69). The terminal 1 transmits the request signal to the authentication server 501 having the next priority order on condition that the priority order i is not above a maximum number I (NO in step S71). In this way, the terminal 1 makes successively the authentication request in accordance with the priority order. If all the authentication servers 501 at the first layer are not enabled to perform the authentication process (YES from step S71), the terminal 1 ends the process.

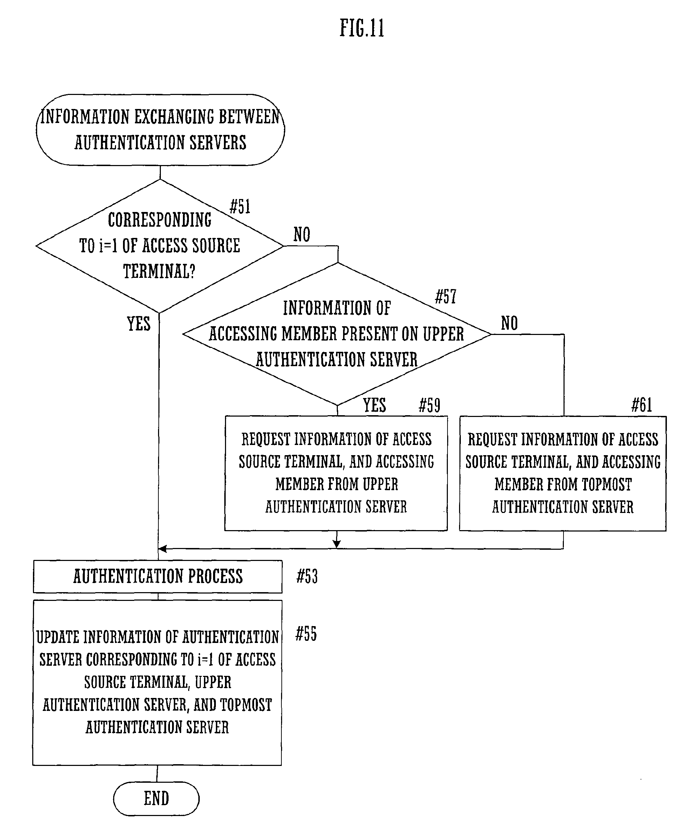

FIG. 11 is a flowchart illustrating an example of an information exchange process performed among the servers of FIGs. 9A and 9B. The authentication server 501 at the first layer that returns a response signal indicating being available in reply to the authentication request signal from the terminal 1 is checked to see if own authentication server 501 corresponds to the priority order i = 1 of the terminal 1 as an access source (step #51). If the authentication server 501 corresponds to the priority order i = 1, the authentication process described above is performed (step #53). After the authentication process, information transmission is performed to update information stored on the authentication server 501, upper servers corresponding thereto (the authentication server 502 at the second layer), and the authentication server 503 at the top layer (step #55).

On the other hand, if own authentication server 501 does not correspond to the priority order i = 1 of the terminal 1 as an access source, it is determined whether information concerning an accessing member is present in the corresponding upper authentication server 502 (step #57). It is noted that the request signal transmitted from the USB memory 4 to the authentication server 501 includes a variety of identification information.

If the information concerning the requesting member is present, a request process is performed to request the authentication server 502 to transmit information concerning the terminal as the access source and the accessing member (step #59). In response to the information request, the authentication server 501 as an access destination is enabled to perform the authentication process (step #53). After the authentication process, an information update process is performed on the authentication server 501 having the priority order i = 1 and the corresponding authentication servers 502 and 503 (step #55). It is noted that step #57 is performed to determine whether the member has made the request using the terminal 1 corresponding to and registered for the member.

On the other hand, if it is determined in step #57 that the information concerning the accessing member is not present in the corresponding upper authentication server 502, a request process is performed to request the topmost authentication server 503 to transmit information concerning the terminal as the access source and the accessing member (step #61). In response to the information request, the authentication server 501 as an access destination is enabled to perform the authentication process (step #53). After the authentication process, an information update process is performed on the authentication server 501 having the priority order i = 1 and the corresponding authentication servers 502 and 503 (step #55). Through the update process, the authentication process is efficiently performed regardless of whichever terminal the USB memory 4 is loaded on.

The present invention may be embodied in the examples described below.

(1) In one preferable example, the particular application software program stored on the particular AP storage unit 232 is stored on the member information management server 8 or an equivalent program authentication server, and downloaded to the terminal 1 from the program authentication server for installation. If an anti-computer-virus step is implemented on the program authentication server, the particular application software program installed on the terminal 1 is executed in an appropriate condition. In such a case, it is contemplated that the particular application software program is created on the terminal 1 or retrieved from an external environment that offers no security guarantee. Such an program is checked for the possibility of computer virus infection by periodically calculating a hash value code in accordance with code information (such as hash value code) that is produced using a program, header information, or the like, and then by checking the hash value code against a first code. This arrangement effectively prohibits the application software program potentially infected with computer virus from being executed.

(2) Information is preferably exchanged between the terminal 1 and the authentication server 5 in view of information leakage in an example described below. For example, transmission information is segmented by predetermined bit unit, and alternately sorted into two rows to produce packets successively. So-called synthesis information is thus produced. In succession, the packets are transmitted to a predetermined authentication server 5 via predetermined different routes, and or received from the authentication server 5. A receiver side reverses these steps, thereby restoring the original transmission information. A predetermined rule as to which route is to be used to transmit each packet needs to be set as appropriate. In this way, even if someone eavesdrops on information along one of a plurality of routes, decryption is prevented. Each packet is preferably encrypted before being transmitted. Preferably from the security point of view, a plurality of types of encryption software programs and decryption software programs may be prepared, and which to use in encryption (i.e., decryption) may be determined randomly or in accordance with a predetermined rule. The determination content may be transmitted to both the terminal 1 and the authentication server 5 so that the terminal 1 and the authentication server 5 respond thereto.

(3) The authentication server 5 provides the password input instruction. Alternatively, a photograph of a person taken at the time of member registration may be registered in advance as image data on the USB memory 4, and the face image is transferred to the display unit 25 to be displayed thereon. And, for example, confirmation identity of the person may be carried out for another person like a store clerk. The store clerk may observe the face of the person, and may press a predetermined key (one of the keys, one key for the identical person and the other for a person assuming another person's identity) instead of the password inputting.

(4) The identification information to be varied includes, in addition to the member identification information, the medium identification information, and the terminal identification information alone or in combination.

The methods of authentication include the authentication of the USB memory 4, the authentication of the terminal 1, the authentication between the terminal 1 and the USB memory 4, and the like. Used for authentication in place of such authentication methods is code information such as owner's digits (16 digits) of a cellular phone held by the member, among a variety of communication terminals held by the member. For example, in one example, a radiowave receiver receiving the identification code information may be arranged in the USB memory 4, and the received identification code information may be transmitted from the terminal 1 loaded with the USB memory 4 to the authentication server 5. The USB memory 4 loaded on the terminal 1 is simply set ready to retrieve the identification code information received from a cellular phone. In this way, the USB memory 4 and the member are authenticated. In one example, each member may be provided with a USB memory 4 and an IC tag storing the identification code information, in place of the cellular phone, and the identification code information may be retrieved from the IC tag with the USB memory 4 loaded on the terminal 1. The IC tag includes an IC chip and an antenna. The IC tag uses radio and a power source cell or the like, as necessary, and reads or writes data such as ID from or to the IC chip through close range communication in a contactless fashion with a reader/writer.

The methods of authentication may be implemented in the following examples. For example, attribute information of each member is stored (registered) as checking information on the authentication server 5. Attributes include a plurality of types (items 9 are included, and are preferably in mnemonic form associated with each individual. Each item of the attributes is preferably less variable. For example, candidates as the attribute items may birth date, name of family member, name of sister or brother, name of the school the member graduated from, blood type, star, store frequented, favorite actor, favorite singer, blood type, star, etc. In authentication, the legitimacy determining unit 501 in the authentication server 5 selects some of the registered attribute items, for example, two or three attribute items at random, and transmits the selected items to the terminal 1 in search of an answer responsive to the transmitted items. The number of selected attribute items may be random. Using the exclusive application software program, the terminal 1 displays as a guide to the user an input instruction to answer the items on the display unit 25, and also sets input time. The application software program of the terminal 1 monitors through unillustrated monitoring means whether input time to each input item is within set time. If the input time is within the set time, the application software program of the terminal 1 transmits input content to the authentication server 5, and if the input time is not within the set time, the application software program of the terminal 1 transmits an input error signal to the authentication server 5. Using unillustrated determining means, the authentication server 5 determines the signal from the terminal 1. Upon determining that the input content has been transmitted, the authentication server 5 compares the data of the input content against checking information data registered. If the authentication server 5 determines that the terminal 1 has transmitted the input error signal, the legitimacy determining unit 501 selects different items or re-selects items from all the items, and then transmits the selected items to the terminal 1. Unlike the password, items to be input are changed randomly at each authentication, and information unknown to a third party is included. Therefore, high authentication accuracy level is thus achieved. Even if the information of the attribute items is examined, a time difference between time another person other than an identical person takes to get the answer and time the identical person takes to remember the answer is substantially long. If time allowed to enter the answer (preferably, several seconds to tens of seconds, for example) is also combined, the identical person authentication accuracy level is raised even more. If the operation unit 24 includes particular units such as a mouse, a touchpanel, and a keyboard, the application software program may be set to receive only input from the keyboard during inputting of the attribute item. In this way, unauthorized operation is thus controlled. The time allowed to enter the answer is not a necessity and may be used as appropriate.

As described above, the present invention relates to the terminal management system that manages execution of a given application software program on the information processing terminal connected to the network. The terminal management system includes a recording medium that is a portable-type recording medium held by a member, and includes a storage unit where medium identification information indentifying the recording medium and member identification information identifying the member are recorded, and an authentication server connected to the information processing terminal via the network. The information processing terminal includes a terminal information storage unit that stores terminal identification information identifying the information processing terminal, and connection location information identifying a connection location with the network, application writing means that writes one or a plurality of particular application software programs from a predetermined external memory to a particular application storage unit, program execution processing means that starts up the particular application software program and controls a production of a predetermined document and transmission and reception of the produced document, loading detector means that detects the loading of the recording medium, and determination information retrieving means that, when a predetermined exclusive application software program from among the particular application software programs is started in response to a detection of the loading, reads from the loaded recording medium the medium identification information and the member identification information, and from the terminal information storage unit, the terminal identification information and the connection location information, and then transmits to the server the medium identification information, the member identification information, the terminal identification information and the connection location information. The server includes determining means that determines from a combination of the medium identification information and the member identification information whether the recording medium is legitimate, and determines from a combination of the terminal identification information and the connection location information whether the information processing terminal is legitimate, and returns determination results thereof to the information processing terminal that is a transmission source. The information processing terminal includes execution permit/prohibit means that permits the program execution processing means to perform program execution if the determining means has determined that the recording medium and the information processing terminal are legitimate. According to the present invention, a general information processing terminal determines whether to permit or prohibit a particular application software program in the information processing terminal in a space discriminated from an execution space of a general application software program on condition that a recording medium held by a member, and storing predetermined information is loaded in the information processing terminal, and that the recording medium is authenticated in accordance with the predetermined information on a server side.

The authentication server preferably includes a checking information storage unit that stores checking information related to the combination of the medium identification information and the member identification information and the combination of the terminal identification information and the connection location information. With this arrangement, the authentication sever may determine in authentication whether the recording medium is legitimate and whether the information processing terminal is legitimate.

The information processing terminal preferably includes a firewall to the network. When the execution permission is received, the execution permit/prohibit means shifts the firewall from a general function state to a particular function state that permits the passing of only a packet that satisfies a combination of a predetermined IP address of another information processing terminal, a predetermined communication protocol, and a predetermined port number. With this arrangement, the security policy is changed by shifting the firewall arranged to the network from the general function state (deactivated state) to the particular function state (activated state) subject to function limitation during the execution of the particular application software program. This arrangement prevents information such as a document file caused in the execution of the particular application software program from being leaked.

Preferably, the recording medium includes position information acquisition means that acquires information specifying position, and time measurement means that measures time and date, and the program execution processing means stores, in a mapped state, the acquired position information and the time and date and results arising from executing an execution file. This arrangement allows the use location and use time and date of the portable recording medium to be clarified. Unauthorized use of the recording medium is thus controlled. The legitimacy determination is performed in a wider scope by referencing the history of the position information and the time and date information.

Preferably, the authentication server includes password input instruction means that instructs a password to be entered to the information processing terminal at the time of the determination of the determining means, and the determining means checks the entered password. With this arrangement, the legitimacy determination is performed more strictly.

Preferably, the execution permit/prohibit means monitors the loading state of the recording medium, and keeps on permitting the program execution while the recoding medium remains loaded. With this arrangement, the recording medium needs to be loaded on the information processing terminal during the execution of the particular application software program, instead of monitoring authentication information only during the authentication process. As a result, unauthorized use of the recording medium is controlled accordingly.

Preferably, the program execution processing means provides the member with a predetermined service, and sets a difference in service between when the recording medium is loaded on own information processing terminal and when the recording is loaded on the other information processing terminal. With this arrangement, the authentication accuracy level is higher when the recording medium is loaded on own information processing terminal than when the recording medium is loaded on another information processing terminal. Therefore, the degree of service, such as a maximum permissible amount of money handled, the secrecy level of the service, and the like may be increased.

### Reference Signs List

- 1: Terminal (information processing terminal)
- 2: Terminal processor
- 21: Controller
- 211: Program execution processor unit (program execution processing means)
- 212: Communication processor unit (application writing means)
- 213: Firewall
- 22: ROM
- 221: Storage unit for OS and the like
- 222: Terminal ID storage unit (terminal information storage unit)
- 23: RAM
- 231: General AP storage unit
- 232: Particular AP storage unit (particular application storage unit)
- 233: Network location information storage unit (terminal information storage unit)
- 234: Produced file storage unit
- 24: Operation unit
- 25: Display unit
- 3: Particular AP processor
- 301: Communication processor unit
- 302: Loading detector unit (loading detector means)
- 303: Determination information retrieving unit (determination information retrieving means)
- 304: Execution permit/prohibit unit (execution permit/prohibit means)
- 305: Timer (time measurement means)
- 4: USB memory (recording medium)
- 401: Medium identification information storage unit
- 402: Member identification information storage unit
- 403: Firmware storage unit
- 411: GPS receiver (position information acquisition means)
- 5, 501, 502, and 503: Authentication servers
- 501: Legitimacy determining unit (determining means, password input instruction means)
- 502: Identification information varying unit (identification information varying means)
- 51: Checking information storage unit
- 7: Network

## Claims

1. A terminal management system that manages execution of a given application software program on an information processing terminal connected to a network, comprising
a recording medium that is a portable-type recording medium held by a member, and includes a storage unit where medium identification information indentifying the recording medium and member identification information identifying the member are recorded, and
an authentication server connected to the information processing terminal via the network,
wherein the information processing terminal includes a terminal information storage unit that stores terminal identification information identifying the information processing terminal, and connection location information identifying a connection location with the network,
application writing means that writes one or a plurality of particular application software programs from a predetermined external memory to a particular application storage unit,
program execution processing means that starts up the particular application software program and controls a production of a predetermined document and transmission and reception of the produced document,
loading detector means that detects the loading of the recording medium, and
determination information retrieving means that, when a predetermined exclusive application software program from among the particular application software programs is started in response to a detection of the loading, reads from the loaded recording medium the medium identification information and the member identification information, and from the terminal information storage unit, the terminal identification information and the connection location information, and then transmits to the server the medium identification information, the member identification information, the terminal identification information and the connection location information,
wherein the server includes determining means that determines from a combination of the medium identification information and the member identification information whether the recording medium is legitimate, and determines from a combination of the terminal identification information and the connection location information whether the information processing terminal is legitimate, and returns determination results thereof to the information processing terminal that is a transmission source, and
wherein the information processing terminal includes execution permit/prohibit means that permits the program execution processing means to perform program execution if the determining means has determined that the recording medium and the information processing terminal are legitimate.

2. The terminal management system according to claim 1, wherein the authentication server comprises a checking information storage unit that stores checking information related to the combination of the medium identification information and the member identification information and the combination of the terminal identification information and the connection location information.

3. The terminal management system according to one of claims 1 and 2, wherein the information processing terminal comprises a firewall to the network, and
wherein when the execution permission is received, the execution permit/prohibit means shifts the firewall from a general function state to a particular function state that permits the passing of only a packet that satisfies a combination of a predetermined IP address of another information processing terminal, a predetermined communication protocol, and a predetermined port number.

4. The terminal management system according to one of claims 1 through 3, wherein the recording medium comprises position information acquisition means that acquires information specifying position, and time measurement means that measures time and date,
wherein the program execution processing means stores, in a mapped state, the acquired position information and the time and date and results arising from executing an execution file.

5. The terminal management system according to one of claims 1 through 4, wherein the authentication server comprises password input instruction means that instructs a password to be entered to the information processing terminal at the time of the determination of the determining means, and
wherein the determining means checks the entered password.

6. The terminal management system according to one of claims 1 through 5, wherein the execution permit/prohibit means monitors the loading state of the recording medium, and keeps on permitting the program execution while the recoding medium remains loaded.

7. The terminal management system according to one of claims 1 through 6, wherein the program execution processing means provides the member with a predetermined service, and sets a difference in service between when the recording medium is loaded on own information processing terminal and when the recording is loaded on the other information processing terminal.

8. A terminal management method of a terminal management system that manages execution of a given application software program on an information processing terminal connected to a network, the system including
a recording medium that is a portable-type recording medium held by a member, and includes a storage unit where medium identification information indentifying the recording medium and member identification information identifying the member are recorded, and
an authentication server connected to the information processing terminal via the network, the terminal management method comprising:
writing with application writing means in the information processing terminal one or a plurality of particular application software programs from a predetermined external memory to a particular application storage unit,
detecting, with loading detector means in the information processing terminal, the loading of the recording medium,
when a predetermined exclusive application software program from among the particular application software programs is started in response to a detection of the loading, reading, with determination information retrieving means in the information processing terminal, from the loaded recording medium the medium identification information and the member identification information, and from a terminal information storage unit, terminal identification information identifying the information processing terminal and connection location information identifying a connection location with network, and then transmitting to the server the medium identification information, the member identification information, the terminal identification information and the connection location information,
determining, with determining means in the server, from a combination of the medium identification information and the member identification information whether the recording medium is legitimate, and determining from a combination of the terminal identification information and the connection location information whether the information processing terminal is legitimate, and returning determination results to the information processing terminal that is a transmission source,
if the determining means has determined that the recording medium and the information processing terminal are legitimate, returning, with execution permit/prohibit means in the information processing terminal, the execution permission to the information processing terminal as the transmission source, and
if the execution permission is received, permitting, with the program execution processing means in the information processing terminal, the particular application software program to be started up and controlling a production of a predetermined document and transmission and reception of the produced document.
